## Europäisches Patentamt
## European Patent Office
## Office européen des brevets

(19)

(11) Numéro de publication : **0 197 855**
**B1**

(12)

# FASCICULE DE BREVET EUROPÉEN

(45) Date de publication du fascicule du brevet :
**10.02.88**

(51) Int. Cl.⁴ : **A 47 J 31/40**, G 01 F 11/28

(21) Numéro de dépôt : **86400691.1**

(22) Date de dépôt : **28.03.86**

(54) **Dispositif pour doser un produit pulvérulent, granulaire ou liquide et appareil comportant un tel dispositif.**

(30) Priorité : **03.04.85 FR 8505085**

(43) Date de publication de la demande :
**15.10.86 Bulletin 86/42**

(45) Mention de la délivrance du brevet :
**10.02.88 Bulletin 88/06**

(84) Etats contractants désignés :
**CH DE GB LI**

(56) Documents cités :
**CH-A-    206 673**
**DE-A-  2 238 507**
**DE-C-    295 453**
**FR-A-  2 298 997**
**FR-A-  2 307 502**
**NL-A-  7 906 356**
**US-A-  1 435 287**

(73) Titulaire : **SEB S.A.**
**F-21260 Selongey (FR)**

(72) Inventeur : **Daloz, Joanny**
**4 rue Général Charbonel**
**F-21120 Is Sur Tille (FR)**

(74) Mandataire : **Bouju, André**
**Cabinet Bouju 38 avenue de la Grande Armée**
**F-75017 Paris (FR)**

Jouve, 18, rue St-Denis, 75001 Paris, France

**Description**

La présente invention concerne un dispositif pour doser un produit pulvérulent, granulaire ou liquide, comprenant une chambre de dosage associée à des moyens pour faire varier le volume de cette chambre.

L'invention vise également un appareil notamment à usage domestique pour préparer une boisson à partir d'une poudre telle qu'une poudre de café soluble ou d'un liquide, comprenant une chambre de dosage associée à un dispositif de dosage du genre précité.

On connaît par exemple selon les brevets français 2 307 502 et le brevet américain 1 435 287 des dispositifs permettant de doser la quantité de café introduite dans une cafetière en fonction du nombre de tasses de café et de la force du café désiré.

Dans tous ces dispositifs, le dosage de la quantité de café est réalisé par pesée. Ces dispositifs nécessitent ainsi, que le récipient recevant la poudre de café soit suspendu à un système de pesée, ce qui complique sérieusement la réalisation des cafetières équipées de tels dispositifs.

L'appareil tel que cafetière ou théière à usage domestique, décrit dans la demande de brevet français déposée par la demanderesse le 3 avril 1985 sous le No. 85 05084 et intitulée : « appareil ménager utilisant une poudre hydrophile », comprend une chambre de dosage immobile destinée à contenir un volume variable de poudre de café ou de thé, en fonction du nombre de tasses ou de la force du café ou du thé que l'utilisateur désire obtenir.

Le but de la présente invention est de créer un dispositif qui permette à l'aide de moyens simples, de modifier le volume de la chambre de dosage, de façon à régler ce volume en fonction à la fois du nombre de doses par exemple du nombre de tasses de café et le volume de chaque dose par exemple la force du café que l'on désire obtenir.

Suivant l'invention, ce dispositif est caractérisé en ce que la chambre de dosage comprend une paroi mobile dans cette chambre, en ce que cette paroi est reliée à un levier articulé sur un axe, en ce que l'extrémité de ce levier opposée à la paroi mobile est associée à de premiers moyens permettant de faire pivoter le levier autour de son axe et à de seconds moyens permettant de modifier le rapport des bras du levier de part et d'autre de son axe de pivotement.

En agissant sur les premiers moyens, on fait pivoter le levier et on déplace la paroi mobile de la chambre de dosage. On peut ainsi modifier grâce à ces premiers moyens, le volume de la chambre de dosage, par exemple en fonction du nombre de tasses de café désiré dans le cas d'une cafetière.

En agissant sur les seconds moyens, on modifie le rapport des bras du levier de part et d'autre de son axe de pivotement, de sorte que le levier commande un déplacement plus ou moins important, pour un déplacement d'amplitude donnée des premiers moyens. Il est ainsi possible de régler le volume de la dose, par exemple en fonction de la force du café ou du thé que l'utilisateur désire préparer.

L'utilisateur peut donc dans le cas par exemple d'une cafetière, régler d'avance le nombre de tasses de café et la force du café qu'il désire obtenir.

Selon une version avantageuse de l'invention, la chambre de dosage est un cylindre dans lequel est monté coulissant un piston qui présente une tige axiale, l'extrémité du levier opposée aux premiers et seconds moyens étant articulée à cette tige.

Lorsque le levier pivote autour de son axe, son extrémité articulée à la tige déplace le piston, ce qui modifie le volume de la chambre de dosage.

Selon une version préférée de l'invention, les premiers et seconds moyens comprennent chacun un bouton de commande et des moyens pour guider le déplacement, des butées pour limiter la course de déplacement de ces moyens et des moyens pour immobiliser ces premiers et seconds moyens dans une position donnée.

Ces boutons de commande sont avantageusement associés chacun à une échelle graduée par exemple en fonction du nombre de tasses et de la force du café ou du thé que l'utilisateur désire obtenir.

D'autres particularités et avantages de l'invention apparaîtront encore dans la description ci-après.

Aux dessins annexés donnés à titre d'exemples non limitatifs :

la figure 1 est une vue en perspective d'une première réalisation du dispositif de dosage conforme à l'invention ;

la figure 2 est une vue en perspective avec arrachements de deux parties du dispositif selon la figure 1 ;

la figure 3 est un diagramme montrant diverses positions occupées par les organes du dispositif conforme à l'invention pour différents réglages de ce dernier ;

la figure 4 est une vue schématique en élévation d'une seconde réalisation du dispositif selon l'invention ;

la figure 5 est une vue schématique en élévation d'une troisième réalisation du dispositif selon l'invention.

la figure 6 est une vue schématique en élévation d'une quatrième réalisation du dispositif selon l'invention ;

la figure 7 est une vue en coupe suivant le plan VII-VII de la figure 6.

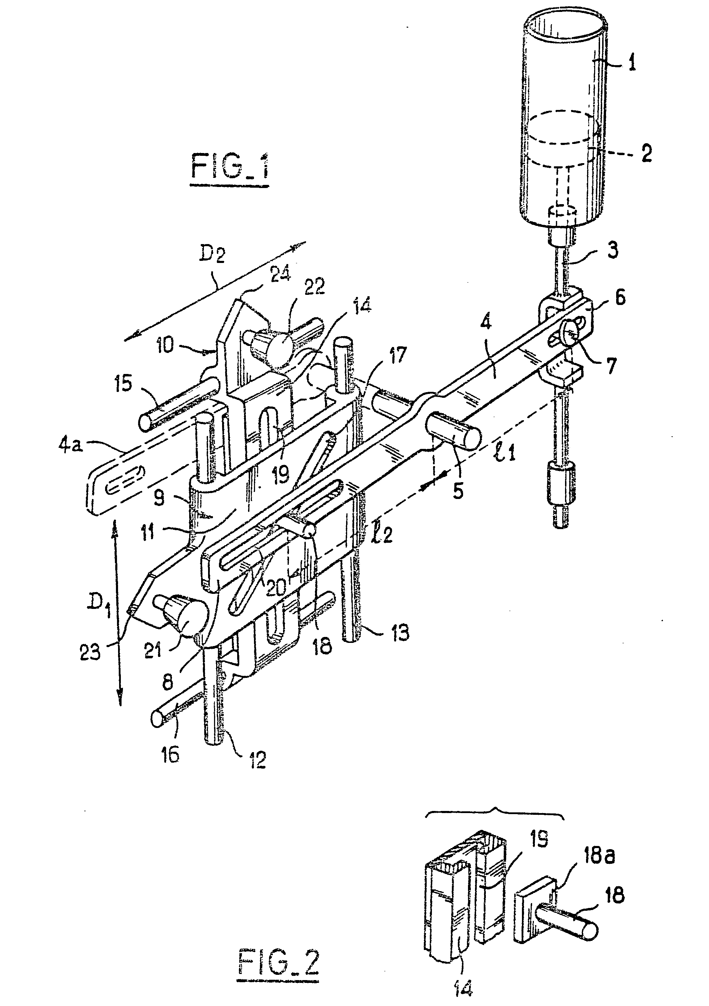

Le dispositif représenté sur la figure 1 est destiné par exemple à équiper une cafetière utilisant de la poudre de café soluble, telle que décrite dans la demande de brevet français n° 85 05084 déposé par la demanderesse le 3 avril 1985 et intitulée : « Appareil ménager utilisant une poudre hydrophile ».

Cette cafetière comporte une chambre de dosage destinée à être remplie de poudre de café, constituée par un cylindre 1 d'axe sensiblement vertical, dans lequel est monté coulissant un piston 2 qui présente une tige axiale 3. Transversalement à cette tige 3 s'étend un levier 4 qui présente sensiblement en son milieu un axe de pivotement 5 qui est fixe et sensiblement perpendiculaire à la tige 3.

L'extrémité 6 du levier 4 est articulée à la tige 3 suivant un axe 7 parallèle à l'axe de pivotement 5.

L'extrémité 8 du levier 4 opposée à l'axe d'articulation 7 est conformément à l'invention associée à de premiers moyens 9 permettant de faire pivoter le levier 4 autour de son axe fixe 5 et à de seconds moyens 10 permettant de modifier le rapport de la longueur $l1$ et $l2$ des bras du levier 4 de part et d'autre de son axe de pivotement 5.

Dans la réalisation de la figure 1, les premiers moyens 9 comprennent une plaque 11 montée coulissante sur deux guides parallèles 12, 13 fixes, suivant une droite $D_1$ transversale au levier 4 et perpendiculaire à son axe 5.

Les seconds moyens 10 comprennent une plaque 14 sensiblement parallèle à la plaque 11 des premiers moyens et montée coulissante sur deux guides 15, 16 fixes suivant une droite $D_2$ sensiblement perpendiculaire à la droite $D_1$ de déplacement des premiers moyens 9.

La plaque 11 des premiers moyens 9 comprend une ouverture allongée 17 oblique par rapport à la droite $D_1$ de déplacement de cette plaque. Dans cette ouverture 17 est engagé un doigt 18 monté coulissant et retenu par un talon 18a dans une ouverture allongée 19 pratiquée dans la plaque 14 des seconds moyens 10 et s'étendant de façon sensiblement parallèle à la droite $D_1$ de déplacement de la plaque 9 des premiers moyens (voir également la figure 2).

Le doigt 18 est également engagé dans une ouverture allongée 20 ménagée près de l'extrémité 8 du levier 4 opposée à la chambre de dosage 1 et s'étendant suivant l'axe de ce levier 4.

Par ailleurs, on voit que chaque plaque 11, 14 porte un bouton de commande 21, 22 accessible à l'utilisateur et permettant à celui-ci de déplacer manuellement la plaque 11 suivant la droite $D_1$ et la plaque 14 suivant la droite $D_2$.

Près du bouton de commande 21 est situé un index 23 mobile suivant la droite $D_1$. En regard de cet index 23 est disposée une échelle graduée fixe (non représentée) indiquant le nombre de tasses que l'utilisateur désire préparer.

De même près du bouton de commande 22 est situé un index 24 mobile suivant la direction $D_2$. En regard de cet index 24 est disposée une échelle graduée fixe (non représentée) indiquant la force du café que l'utilisateur désire préparer.

Le fonctionnement du dispositif que l'on vient de décrire est le suivant :

Le bouton de commande 22 étant fixe par exemple au milieu de sa course correspondant à un café de force normale, lorsque l'utilisateur pousse le bouton de commande 21 vers le haut, le levier pivote autour de son axe 5 et son extrémité 6 s'abaisse en tirant le piston 2 vers le bas. L'utilisateur augmente ainsi le volume de la chambre de dosage 1 et par conséquent le nombre de tasses qu'il désire obtenir.

Inversement, s'il désire un nombre réduit de tasses de café, l'utilisateur pousse le bouton 21 vers le bas, ce qui a pour effet de repousser le piston 2 vers le haut, ce qui réduit le volume de la chambre de dosage 1.

Par ailleurs, si pour un nombre de tasses déterminé fixé par la position du bouton de commande 21, l'utilisateur désire du café plus fort que la force moyenne affichée par l'index du bouton 22, il pousse celui-ci vers la droite de la figure 1, ce qui a pour effet de raccourcir la longueur $l_2$ du bras du levier compris entre le doigt 18 et l'axe 5 et d'entraîner un pivotement du levier 4, un déplacement du piston 2 vers le bas et une augmentation du volume de la chambre de dosage 1. Cette augmentation de volume permet pour un nombre de tasses donné de doser une plus grande quantité de café qui sera ainsi plus fort.

Inversement, si l'utilisateur désire diminuer la force du café, il pousse le bouton de commande 22 vers la gauche de la figure 1, pour obtenir que le levier 4 s'abaisse et pousse le piston vers le haut.

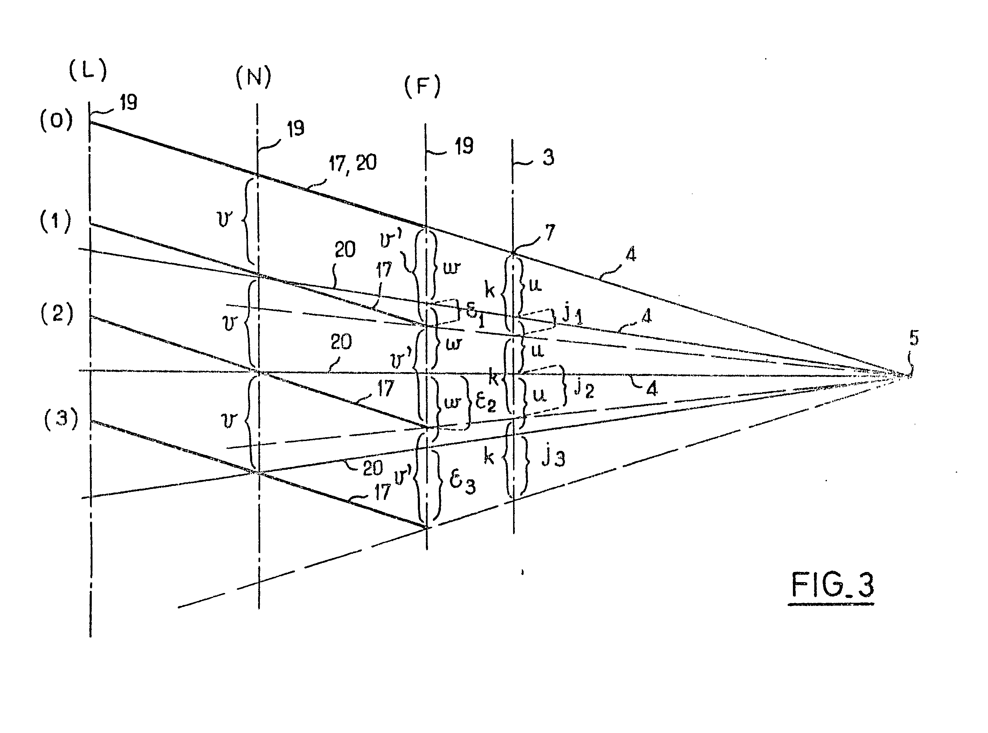

Le fonctionnement du dispositif selon l'invention est expliqué d'une manière plus détaillée et théorique en référence au diagramme représenté sur la figure 3.

Les positions successives (0), (1), (2), (3) du levier 4 articulé sur son axe 5 sont symbolisées par une série de traits 4 convergeant vers l'axe 5 du levier.

Les positions successives (L), (N), (F) (café léger, normal, fort) de l'ouverture allongée 19 sont symbolisées par trois traits verticaux 19.

Les positions successives de l'ouverture allongée 20 pour différents dosages sont symbolisées par des traits 20 qui sont confondus avec les traits 4 symbolisant le levier 4.

Entre les deux positions (N) et (F), le levier 4 comporte l'ouverture allongée 17 qui est ménagée sur la plaque 11. La tige du piston 2 est symbolisée par un trait vertical 3, son articulation au levier 4 étant représentée par le point d'intersection 7.

Dans la position (0), les ouvertures allongées 17 et 20 sont confondues.

Les déplacements entre les positions (1) à (2) et (2) à (3) dans la position (N) (café normal) sont égaux et ont pour valeur v. La tige 3 du piston se déplace en même temps suivant des distances successives ayant des valeurs u proportionnelles aux valeurs v.

Dans la position (F) (café fort), les déplacements sont les mêmes soit v', puisque l'ouverture allongée 17 se déplace parallèlement à elle-même.

La tige 3 du piston 2 se déplace suivant des valeurs proportionnelles k égales entre elles.

Sur l'ouverture allongée 14 en position (F) (café fort), le bras 4 se déplace d'une valeur proportionnelle w pour chaque translation (1) à (2), (2) à (3) etc...

On peut démontrer que les différences v'-w pour chacune des positions sont telles que $\varepsilon_2 = 2\varepsilon_1$ c'est-à-dire des multiples entiers.

Les déplacements de la tige 3 du piston 2 et par conséquent les variations du volume dosé, restent proportionnels aux déplacements du levier 4.

Les valeurs k de ces déplacements sont donc égales entre elles et les différences $k-u=j_1$, $j_2$, $j_3$ sont telles que $j_2=2j_1$, $j_3=3j_1$, etc...

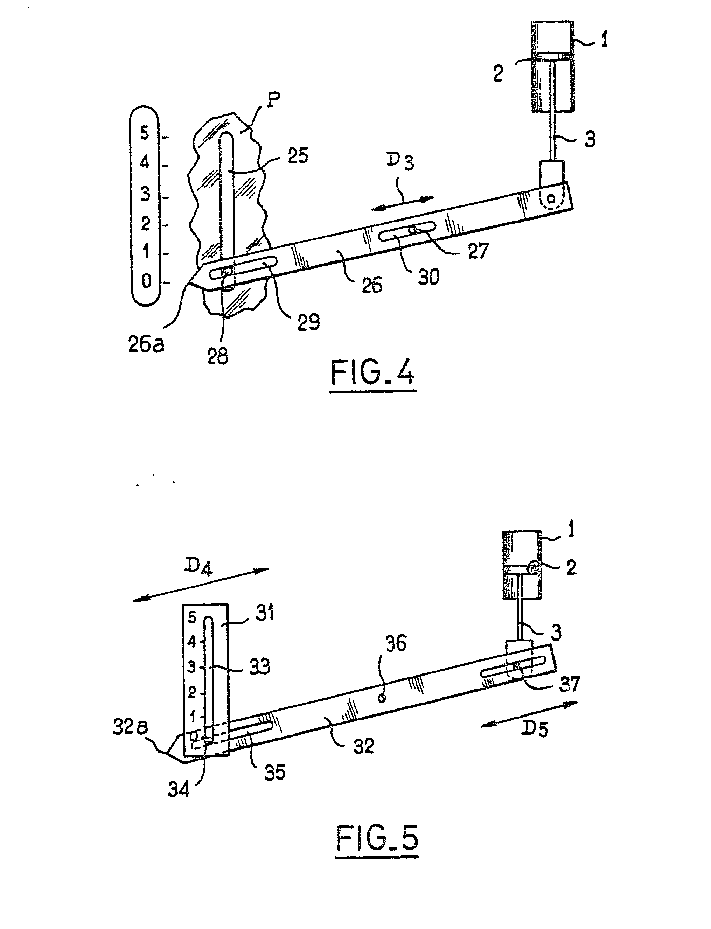

Sur la figure 4, on a représenté schématiquement une première variante de réalisation du dispositif selon l'invention.

Dans cette réalisation, les premiers moyens comprennent une ouverture allongée 25 s'étendant transversalement par rapport au levier 26, ménagée dans un plan fixe P sensiblement perpendiculaire à l'axe 27 de pivotement du levier 26. Un doigt 28 est engagé dans cette ouverture 25 et dans une ouverture allongée 29 pratiquée dans le levier 26 et s'étendant dans l'axe de ce dernier près de son extrémité 26a opposée à la chambre de dosage 1.

Les seconds moyens comprennent une ouverture allongée 30 pratiquée entre les deux extrémités opposées du levier 26 et suivant son axe, dans laquelle est engagé de façon mobile suivant une droite $D_3$, l'axe 27 de pivotement du levier 26, lorsque celui-ci est dans la position correspondant au dosage zéro.

En regard de l'extrémité 26a qui forme un index, du levier 26 est disposée une échelle graduée 0, 1, 2, 3, 4, 5.

Lorsqu'on déplace l'axe 27 de pivotement suivant la droite $D_3$, on modifie le rapport des longueurs des bras du levier de part et d'autre de cet axe 27 et on modifie le volume de la dose c'est-à-dire la force du café pour un nombre donné de tasses affiché par l'index 26a.

Lorsqu'on déplace l'index 26a vers le haut, on augmente également le volume de la chambre de dosage 1 pour accroître le nombre de tasses.

Dans la variante de réalisation suivant la figure 5, les premiers moyens comprennent une plaque 31 sensiblement parallèle au levier 32 et comportant une ouverture allongée 33 transversale à ce levier 32. Un doigt 34 est engagé dans cette ouverture 33 et dans une ouverture allongée 35 pratiquée dans le levier 32. Cette dernière s'étend suivant l'axe de ce levier près de son extrémité 32a opposée à la chambre de dosage 1. L'axe 36 de pivotement du levier 32 est fixe.

Les seconds moyens comprennent le fait que la plaque 31 est déplaçable suivant une droite $D_4$ sensiblement parallèle à l'axe longitudinal du levier 32, lorsque celui-ci est dans la position correspondant au dosage zéro. La plaque 31 comporte en regard de l'ouverture allongée 33 une échelle graduée.

Lorsqu'on déplace la plaque 31 dans la direction $D_4$, on modifie le rapport des longueurs des bras du levier de part et d'autre de son axe fixe 36 et on modifie le volume de la dose, c'est-à-dire la force du café pour un nombre donné de tasses déterminé par la position du doigt 34 dans l'ouverture allongée 33.

Lorsqu'on déplace ce doigt 34 vers le haut, on augmente également le volume de la chambre de dosage 1 pour accroître le nombre de tasses.

Dans la variante de réalisation suivant la figure 5, au lieu de rendre la plaque 31 mobile selon une droite D4, il est possible de rendre le point d'articulation 36 de la tige 3 mobile selon une droite D5 sensiblement parallèle à l'axe longitudinal du levier 32 lorsque celui-ci est en position zéro. Le déplacement du point d'articulation 37 est rendu possible soit en rendant tout le dispositif doseur 1, 2, 3 mobile, soit en aménageant une articulation sur la tige 3 de manière que, le cylindre 1 restant fixe, le point 36 puisse se déplacer transversalement.

Un résultat identique est obtenu en rendant l'axe 36 et la plaque 31 solidairement mobiles selon une droite D4.

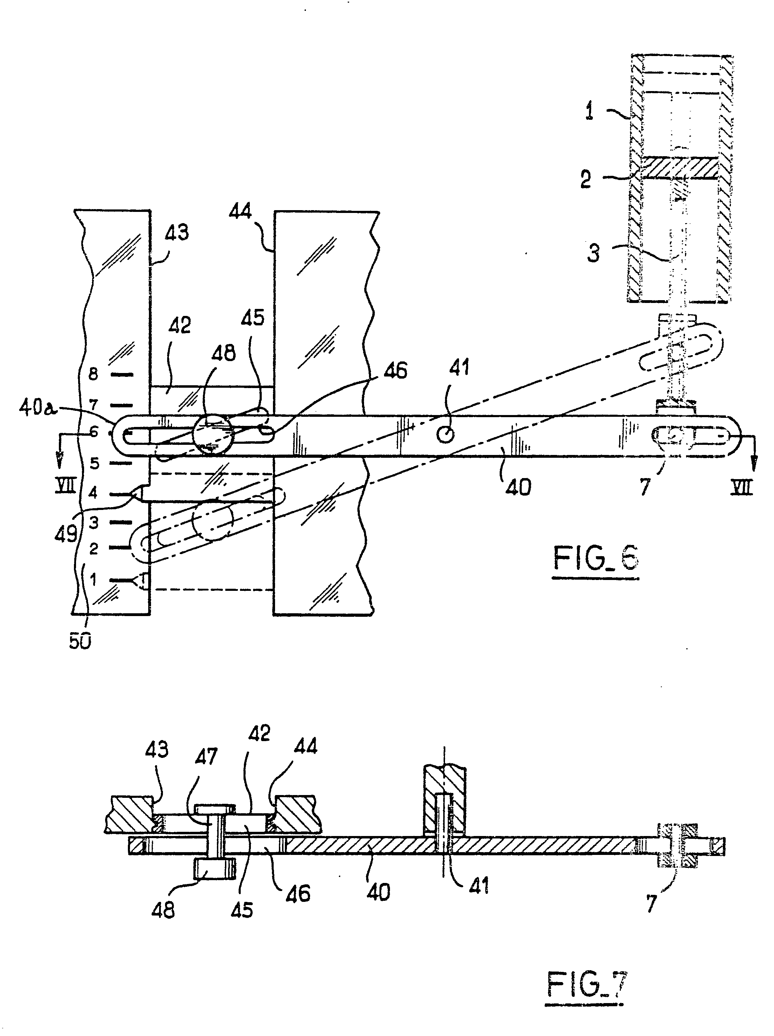

Dans la variante de réalisation suivant les figures 6 et 7, le levier 40 est articulé sur un axe fixe 41 et son extrémité 40a opposée à la chambre de dosage 1 est rendue solidaire d'un organe constitué par une plaque 42 montée coulissante en deux guides 43, 44, parallèles, transversaux au levier 40. Cette plaque 42 comporte une ouverture allongée 45, inclinée par rapport aux guides 43, 44. L'extrémité 40a du levier 40 comporte une ouverture allongée 46 alignée dans la direction de ce levier 40, cette extrémité 40a du levier étant rendue solidaire de la plaque 42 par un doigt 47 présentant un bouton moleté 48 engagé dans les ouvertures allongées 45, 46 pratiquées dans le levier 40 et dans la plaque 42. Le doigt 47 est mobile dans lesdites ouvertures allongées 45, 46.

En regard d'un index 49 de la plaque 42 est disposée une échelle graduée 50 portant des chiffres indiquant le nombre de tasses de café désirées.

Dans la position indiquée sur la figure 6, l'index 49 est en regard du chiffre 4 qui indique que le volume de la chambre de dosage 1 défini par le piston 2 correspond à quatre tasses de café. Si l'on veut augmenter le nombre de tasses de café, on déplace l'index 49 vers le haut. Inversement, si l'on veut diminuer le nombre de tasses de café, on déplace l'index vers le bas, par exemple jusque vers le chiffre 1 (voir position en pointillé du levier 40 et du piston 2).

Dans la position indiquée sur la figure 6, le bouton moleté 48 du doigt 47 se trouve au milieu de l'ouverture allongée 45 ce qui correspond à une force de café moyenne. Si l'on veut augmenter la force du café, on déplace le bouton moleté 48 vers la droite, ce qui fait pivoter le levier 40 vers le bas, compte tenu de l'inclinaison de l'ouverture allongée 45 par rapport aux guides 43, 44 et le piston 2 se déplace vers le bas en augmentant le volume de la chambre 1. Si l'on veut diminuer la force du café, on déplace le bouton moleté 48 vers la gauche.

Le dispositif conforme à l'invention peut s'appliquer à tout appareil à usage domestique ou non, comprenant une chambre de dosage à volume variable destinée à contenir un produit pulvérulent, granulaire ou liquide dans lequel on désire pouvoir modifier le volume de chaque dose unitaire et le nombre de ces doses unitaires.

Bien entendu, le dispositif peut également comporter des moyens appropriés pour bloquer les parties mobiles du dispositif dans les différentes positions.

Par ailleurs la chambre de dosage pourrait être non cylindrique l'essentiel étant qu'elle présente une paroi mobile ou déformable pour modifier son volume intérieur.

Par ailleurs le levier au lieu d'être droit pourrait présenter un bras 4a (représenté en pointillés sur la figure 1) non situé dans le prolongement de l'autre bras, si cela s'avère nécessaire pour réduire l'encombrement du dispositif.

**Revendications**

1. Dispositif pour doser un produit pulvérulent, granulaire, ou liquide, comprenant une chambre de dosage (1) qui présente un volume variable associé à des moyens pour faire varier ce volume, caractérisé en ce que la chambre de dosage (1) comprend une paroi (2) mobile dans cette chambre, en ce que cette paroi (2) est reliée à un levier (4), (26), (32) articulé sur son axe (5), (27), (36), en ce que l'extrémité de ce levier opposée à la paroi mobile (2) est associée à des premiers moyens (9), (25), (28), (33), (34) permettant de faire pivoter le levier autour de son axe et à de seconds moyens (10), (27), (30), (31), (35) permettant de modifier le rapport des bras du levier (4), (26), (32) de part et d'autre de son axe de pivotement (5), (27), (36).

2. Dispositif conforme à la revendication 1, caractérisé en ce que la chambre de dosage (1) est un cylindre dans lequel est monté coulissant un piston (2) qui présente une tige axiale (3), l'extrémité du levier (4), (26), (32) opposée aux premiers et seconds moyens étant articulée à cette tige (3).

3. Dispositif conforme à l'une des revendications 1 ou 2, caractérisé en ce que les premiers et seconds moyens (9), (10) comprennent chacun un bouton de commande (21), (22) et des moyens (12), (13), (15), (16) pour guider le déplacement, des butées pour limiter la course de déplacement de ces moyens et des moyens pour immobiliser ces premiers et seconds moyens dans une position donnée.

4. Dispositif conforme à l'une des revendications 1 à 3, caractérisé en ce que les premiers moyens (9) comprennent une plaque (11) montée coulissante suivant une droite (D₁) fixe transversale par rapport au levier (4) et par rapport à son axe (5), en ce que les seconds moyens (10) comprennent une plaque (14) sensiblement parallèle à la plaque (11) des premiers moyens et montée coulissante suivant une droite (D₂) fixe sensiblement perpendiculaire à la droite (D₁) de déplacement des premiers moyens, en ce que la plaque (11) des premiers moyens comprend une ouverture allongée (17) oblique par rapport à la droite (D₁) de déplacement de cette plaque, dans laquelle est engagé un doigt (18) monté coulissant dans une ouverture allongée (19) pratiquée dans la plaque (14) des seconds moyens et s'étendant de façon sensiblement parallèle à la droite (D₁) de déplacement de la plaque (11) des premiers moyens, en ce que ce doigt (18) est également engagé dans une ouverture allongée (20) ménagée près de l'extrémité (8) du levier (4) opposée à la chambre de dosage (1) et s'étendant suivant l'axe de ce levier et en ce que l'axe (5) de pivotement du levier est fixe par rapport à ce dernier.

5. Dispositif conforme à la revendication 4, caractérisé en ce qu'un bouton de commande (21), (22) est fixé sur chacune des plaques (11), (14).

6. Dispositif conforme à l'une des revendications 1 à 3, caractérisé en ce que les premiers moyens comprennent une ouverture allongée (25) s'étendant transversalement par rapport au levier (26) et ménagée dans un plan (P) fixe sensiblement perpendiculaire à l'axe (27) de pivotement de ce levier, un doigt (28) engagé dans cette ouverture (25) et dans une ouverture allongée (29) pratiquée dans le levier (26) et s'étendant dans l'axe de ce levier près de son extrémité (26a) opposée à la chambre de dosage (1) et en ce que les seconds moyens comprennent une ouverture allongée (30) pratiquée entre les deux extrémités opposées du levier (26) et suivant son axe, dans laquelle est engagé de façon mobile l'axe (27) de pivotement du levier.

7. Dispositif conforme à l'une des revendications 1 à 3, caractérisé en ce que les premiers moyens comprennent une plaque (31) sensiblement parallèle au levier (32) et comportant une ouverture allongée (33) transversale à ce levier et un doigt (34) engagé dans cette ouverture (33) et dans une ouverture allongée (35) pratiquée dans le levier (32) et s'étendant dans l'axe de ce dernier et près de son extrémité (32a) opposée à la chambre de dosage (1), en ce que l'axe (36) de pivotement de ce levier est fixe et en ce que les seconds moyens comprennent le fait que la plaque (31) est déplaçable suivant une droite (D₄) sensiblement parallèle à l'axe longitudinal du levier.

8. Dispositif conforme à l'une des revendications 1 à 7, caractérisé en ce que les droites (D₁, D₂, D₃, D₄) suivant lesquelles se déplacent les premiers et seconds moyens sont associées à une échelle graduée indiquant respectivement le nombre de doses et le volume de la dose que l'on désire obtenir.

9. Dispositif conforme à l'une des revendications 1 ou 2, caractérisé en ce que le levier (40) est articulé sur un axe fixe (41) et son extrémité (40a) opposée à la chambre de dosage (1) est rendue solidaire d'un organe (42) monté coulissant sur un guide (43, 44) transversal au levier (40), en ce que cet organe (42) comporte une ouverture allongée (45) inclinée par rapport au guide (43, 44), en ce que l'extrémité (40a) du levier (40) comporte une ouverture allongée (46) alignée dans la direction de ce levier, cette extrémité (40a) du levier étant rendue solidaire de l'organe (42) par un doigt (47) engagé dans les ouvertures allongées (45, 46) pratiquées dans le levier (40) et dans l'organe (42), ce doigt (47) étant mobile dans lesdites ouvertures allongées (45, 46).

10. Appareil pour préparer une boisson à partir d'une poudre et/ou d'un liquide, comprenant une chambre (1) pour doser la poudre ou le liquide, caractérisé en ce que cette chambre de dosage (1) est associée à un dispositif de dosage conforme à l'une des revendications 1 à 9.

**Claims**

1. Device for metering a powdered, granular or liquid product, having a metering chamber (1) of variable volume, associated with means for changing the volume, characterized in that the metering chamber (1) comprises a movable wall (2) within said chamber, in that said wall (2) is connected to a lever (4), (26), (32) pivotally mounted on its axis (5), (27), (36), in that the end of the lever opposite the movable wall (2) is associated with first means (9), (25), (28), (33), (34) allowing the lever to be pivoted about its axis, and with second means (10), (27), (30), (31), (35) allowing the ratio of the arms of the lever (4), (26), (32) on either side of its pivotal axis (5), (27), (36) to be varied.

2. Device according to claim 1, characterized in that the metering chamber (1) is a cylinder in which is slideably mounted a piston (2) having an axial piston rod (3), the end of the lever (4), (26), (32) opposite the first and second means being articulated to this piston rod (3).

3. Device according to one of claims 1 or 2, characterized in that the first and second means (9), (10) each comprise a respective control knob (21), (22), means (12), (13), (15), (16) for guiding the displacement, abutments for limiting the extent of displacement of said means, and means for immobilizing the first and second means in a given position.

4. Device according to one of claims 1 to 3, characterized in that the first means (9) comprise a plate (11) mounted for sliding along a fixed straight line (D1) which is transverse to the lever (4) and to its axis (5), in that the second means (10) comprise a plate (14) substantially parallel to the plate (11) of the first means and mounted for sliding along a fixed straight line (D2) substantially perpendicular to the straight line (D1) of displacement of the first means, in that the plate (11) of the first means presents an elongate opening (17) inclined with respect to the straight line (D1) of displacement of said plate, in which plate is engaged a finger (18) mounted to slide in an elongate opening (19) provided in the plate (14) of the second means, and extending substantially parallel to the straight line (D1) of displacement of the plate (11) of the first means, in that said finger (18) is likewise engaged in an elongate opening (20) provided near the end (8) of the lever (4) opposite the metering chamber (1) and extending along the axis of said lever, and in that the pivotal axis (5) of the lever is fixed with respect to the latter.

5. Device according to claim 4, characterized in that a control knob (21), (22) is fixed on each of the plates (11), (14).

6. Device according to one of claims 1 to 3, characterized in that the first means comprise an elongate opening (25) extending transversely of the lever (26) and located in a fixed plane (P) substantially perpendicular to the pivotal axis (27) of the lever, a finger (28) engaged in said opening (25) and in an elongate opening (29) provided in the lever (26) and extending along the axis of the lever near to the end (26a) thereof opposite the metering chamber (1), and in that the second means comprise an elongate opening (30) provided between the two opposed ends of the lever (26) and following the axis thereof, in which there is movably engaged the pivotal axis (27) of the lever.

7. Device according to one of claims 1 to 3, characterized in that the first means comprise a plate (31) substantially parallel to the lever (32) and comprising an elongate opening (33) transverse of said lever and a finger (34) engaged in said opening (33) and in an elongate opening (35) provided in the lever (32) and extending along the axis of the latter and adjacent the end (32a) thereof opposite the metering chamber (1), and in that the pivotal axis (36) of the lever is fixed, and in that the second means comprise the fact that the plate (31) is displaceable along a straight line (D4) substantially parallel to the longitudinal axis of the lever.

8. Device according to one of claims 1 to 7, characterized in that the straight lines (D1, D2, D3, D4) along which the first and second means are displaced are associated with a graduated scale showing respectively the number of doses and the volume of the dose which it is desired to obtain.

9. Device according to one of claims 1 or 2, characterized in that the lever (40) is pivotable about a fixed axis (41) and its end (40a) opposite the metering chamber (1) forms part of a unit (42) slideably mounted on a guide (43, 44) transverse of the lever (40), in that said unit (42) comprises an elongate opening (45) inclined with respect to the guide (43, 44), in that the end (40a) of the lever (40) presents an elongate opening (46) aligned in the direction of the lever, said end (40a) of the lever forming part of the unit (42) by means of a finger (47) engaged in the elongate openings (45, 46) provided in the lever (40) and in the unit (42), said finger (47) being movable within said elongate openings (45, 46).

10. Apparatus for preparing a beverage from a powder and/or a liquid, comprising a chamber (1) for metering the powder or the liquid, characterized in that the metering chamber (1) is associated with a metering device in accordance with one of claims 1 to 9.

## Patentansprüche

1. Vorrichtung zur Dosierung eines pulverförmigen, kornförmigen oder flüssigen Produktes, mit einer Dosierkammer (1), die ein variables Volumen aufweist, dem Mittel zum Verändern dieses Volumens zugeordnet sind, dadurch gekennzeichnet, daß die Dosierkammer (1) eine in dieser Kammer bewegliche Wand (2) umfaßt, daß diese Wand (2) mit einem Hebel (4), (26), (32) verbunden ist, der auf seiner Achse (5), (27), (36) angelenkt ist, daß das von der beweglichen Wand (2) abgewandte Ende dieses Hebels ersten Mitteln (9), (25), (28), (33), (34) zugeordnet ist, die es gestatten, diesen Hebel um seine Achse zu verschwenken, und zweiten Mitteln (10), (27), (30), (31), (35) zugeordnet ist, die es gestatten, das Verhältnis der Arme des Hebels (4), (26), (32) auf beiden Seiten seiner Schwenkachse (5), (27), (36) zu verändern.

2. Vorrichtung nach Anspruch 1, dadurch gekennzeichnet, daß die Dosierkammer (1) ein Zylinder ist, worin ein Kolben (2) verschiebbar angebracht ist, der eine axiale Stange (3) aufweist, wobei das von den ersten und von den zweiten Mitteln abgewandte Ende des Hebels (4), (26), (32) an dieser Stange (3) angelenkt ist.

3. Vorrichtung nach Anspruch 1 oder 2, dadurch gekennzeichnet, daß die ersten und die zweiten Mittel (9), (10) jeweils einen Steuerknopf (21), (22) und Mittel (12), (13), (15), (16) zur Bewegungsführung, Anschläge zur Begrenzung der Bewegungsstrecke dieser Mittel und Mittel zum Stillsetzen dieser ersten und zweiten Mittel in einer gegebenen Stellung umfassen.

4. Vorrichtung nach einem der Ansprüche 1 bis 3, dadurch gekennzeichnet, daß die ersten Mittel (9) eine Platte (11) umfassen, die entlang einer festen, zu dem Hebel (4) und zu seiner Achse (5) transversal verlaufenden Geraden ($D_1$) verschiebbar gelagert ist, daß die zweiten Mittel (10) eine Platte (14) umfassen, die im wesentlichen parallel zu der Platte (11) der ersten Mittel ist und längs einer festen, im wesentlichen senkrecht zu der Geraden ($D_1$) der Bewegung der ersten Mittel verlaufenden Geraden ($D_2$) verschiebbar gelagert ist, daß die Platte (11) der ersten Mittel eine gestreckte Öffnung (17) aufweist, die schräg bezüglich der Geraden ($D_1$) der Bewegung dieser Platte verläuft und worin ein Finger (18) eingreift, der verschiebbar in einer gestreckten Öffnung (19) gelagert ist, welche in der Platte (14) der zweiten Mittel angebracht ist und sich im wesentlichen parallel zu der Geraden ($D_1$) der Bewegung der Platte (11) der ersten Mittel erstreckt, daß dieser Finger (18) ferner in eine gestreckte Öffnung (20) eingreift, die in der Nähe des von der Dosierkammer (1) abgewandten Endes (8) des Hebels (4) angebracht ist und sich entlang der Achse dieses Hebels erstreckt, und daß die Schwenkachse (5) des Hebels in bezug auf letzteren festliegt.

5. Vorrichtung nach Anspruch 4, dadurch gekennzeichnet, daß ein Steuerknopf (21), (22) an jeder der Platten (11), (14) befestigt ist.

6. Vorrichtung nach einem der Ansprüche 1 bis 3, dadurch gekennzeichnet, daß die ersten Mittel eine gestreckte Öffnung (25) aufweisen, die sich transversal bezüglich des Hebels (26) erstreckt und in einer festen Ebene (P) angebracht ist, die im wesentlichen senkrecht zur Schwenkachse (27) dieses Hebels liegt, wobei ein Finger (28) in diese Öffnung (25) und in eine gestreckte Öffnung (29) eingreift, die in diesem Hebel (26) angebracht ist und sich in der Achse dieses Hebels in der Nähe seines Endes (26a) erstreckt, das von der Dosierkammer (1) abgewandt ist, und daß die zweiten Mittel eine gestreckte Öffnung (30) umfassen, die zwischen den beiden einander gegenüberliegenden Enden des Hebels (26) und entlang seiner Achse angebracht ist und worin die Schwenkachse (27) des Hebels beweglich eingreift.

7. Vorrichtung nach einem der Ansprüche 1 bis 3, dadurch gekennzeichnet, daß die ersten Mittel eine im wesentlichen zu dem Hebel (32) parallele und eine gestreckte, zu diesem Hebel transversale Öffnung (33) aufweisende Platte (31) und einen Finger (34) umfassen, der in diese Öffnung (33) und in eine gestreckte Öffnung (35) eingreift, welche in dem Hebel (32) angebracht ist und sich in der Achse desselben sowie in der Nähe seines von der Dosierkammer (1) abgewandten Endes (32a) erstreckt, daß die Schwenkachse (36) dieses Hebels festliegt und daß die zweiten Mittel die Tatsache umfassen, daß die Platte (31) längs einer Geraden ($D_4$) verschiebbar ist, die im wesentlichen parallel zur Längsachse des Hebels ist.

8. Vorrichtung nach einem der Ansprüche 1 bis 7, dadurch gekennzeichnet, daß die Geraden ($D_1$, $D_2$, $D_3$, $D_4$), entlang welchen die ersten und die zweiten Mittel bewegbar sind, einer Skala zugeordnet sind, die jeweils die Anzahl von Dosen und das Volumen der Dosis angibt, die erhalten werden sollen.

9. Vorrichtung nach Anspruch 1 oder 2, dadurch gekennzeichnet, daß der Hebel (40) auf einer festen Achse (41) angelenkt ist und sein von der Dosierkammer (1) abgewandtes Ende (40a) fest mit einem Organ (42) verbunden ist, das auf einer zu dem Hebel (40) transversalen Führung (43, 44) verschiebbar gelagert ist, daß dieses Organ (42) eine gestreckte Öffnung (45) aufweist, die gegenüber der Führung (43, 44) geneigt ist, daß das Ende (40a) des Hebels (40) eine gestreckte Öffnung (46) aufweist, die in der Richtung dieses Hebels ausgerichtet ist, wobei dieses Ende (40a) des Hebels an das Organ (42) fest angeschlossen ist durch einen Finger (47), der in die gestreckten Öffnungen (45, 46) eingreift, welche in dem Hebel (40) und in dem Organ (42) angebracht sind, wobei dieser Finger (47) in den genannten gestreckten Öffnungen (45, 46) beweglich ist.

10. Gerät für die Zubereitung eines Getränks aus einem Pulver und/oder einer Flüssigkeit, mit einer Kammer (1) zur Dosierung des Pulvers oder der Flüssigkeit, dadurch gekennzeichnet, daß diese Dosierkammer (1) einer Dosiervorrichtung nach einem der Ansprüche 1 bis 9 zugeordnet ist.

FIG_1

D2
24
22
14
10
15
17
4a
9
19
5
$\ell_1$
11
$\ell_2$
D1
20
13
23
21
18
8
16
12

1
2
3
6
7
4

FIG_2

19
18a
18
14

FIG. 3

FIG.4

FIG.5

FIG_6

FIG_7